# EUROPEAN PATENT APPLICATION

(11) **EP 4 451 620 A1**
(43) Date of publication of application: **23.10.2024**
(21) Application number: 24160016.2
(22) Date of filing: 27.02.2024
(51) Int. Cl.: H04L 12/18

(54) **SYSTEMS AND METHODS FOR PROGRAMMATICALLY UPDATING CONTEXTS FOR MULTI-USER CONFERENCES**

(30) Priority: 20.04.2023 US 202318303608
(71) Applicant: Meta Platforms Technologies, LLC, Menlo Park, CA 94025 (US)
(72) Inventor: Bagotra, Ankush, Menlo Park (US); Basarge, Shreyas Narendra, Menlo Park (US)
(74) Representative: Murgitroyd & Company

(57) **Abstract**

A computer-implemented method for programmatically updating contexts for multi-user conferences may include (i) identifying a multi-user conference being participated in by a plurality of computing devices, (ii) detecting a thematic context of the multi-user conference, (iii) modifying, in response to detecting the thematic context, a digital object within the multi-user conference to align with the thematic context, and (iv) transmitting the modified digital object to the plurality of computing devices as part of the multi-user conference. Various other methods, systems, and computer-readable media are also disclosed.

## Description

### TECHNICAL FIELD

The present disclosure is generally directed to systems and methods for identifying a context of a multi-user conference and automatically updating a user's display name, background, avatar, environment, and/or other digital objects to match the context.

### BACKGROUND

It is typical for a user may to present information, such as a display name, and digital objects, such as a digital background, when participating in a multi-user conference. The information and digital objects the user wishes to present in the multi-user conference may depend on the context of the multi-user conference. For example, a user may switch display names and backgrounds between a personal video call and a professional video call. In another example, the setting of an artificial reality (AR) call may change to reflect a different environment, such as a corporate retreat in the mountains.

### SUMMARY

According to a first aspect, there is provided a computer-implemented method comprising: identifying a multi-user conference being participated in by a plurality of computing devices; detecting a thematic context of the multi-user conference; modifying, in response to detecting the thematic context, a digital object within the multi-user conference to align with the thematic context; and transmitting the modified digital object to the plurality of computing devices as part of the multi-user conference.

Detecting the thematic context of the multi-user conference may comprise identifying at least one user participating in the multi-user conference who is associated with the thematic context.

Detecting the thematic context of the multi-user conference may comprise identifying at least one keyword associated with the thematic context in speech of a user participating in the multi-user conference.

Detecting the thematic context of the multi-user conference may comprise matching the multi-user conference with a scheduled event on a calendar that is associated with the thematic context.

The multi-user conference may comprise a video conference with a live video feed captured by at least one of the plurality of computing devices.

Modifying the digital object may comprise modifying a background of the live video feed.

The multi-user conference may comprise an artificial reality conference within an artificial reality environment.

Modifying the digital object may comprise modifying the artificial reality environment.

Modifying the digital object may comprise modifying a display name of a user participating in the multi-user conference.

Modifying the digital object may comprise modifying audio of the multi-user conference.

Modifying the digital object may comprise modifying a virtual object that is visible in a graphical representation of the multi-user conference.

The computer-implemented method may further comprise: detecting a new thematic context of the multi-user conference; modifying, in response to detecting the new thematic context, the digital object within the multi-user conference to align with the new thematic context; and transmitting the modified digital object to the plurality of computing devices as part of the multi-user conference.

Modifying the digital object may comprise using a generative artificial intelligence algorithm to create the modified digital object based on the thematic context.

According to a second aspect, there is provided a system comprising: at least one processor; and memory comprising computer-executable instructions that, when executed by the at least one processor, cause the at least one processor to carry out the method of any preceding claim. The processor(s) and the memory may be physical.

According to a third aspect, there is provided a computer-readable medium comprising one or more computer-readable instructions that, when executed by at least one processor of a computing device, cause the computing device to carry out the method of the first aspect. The medium may be non-transitory.

According to a fourth aspect, there is provided a computer program product comprising instructions which, when the product is executed by a computer, cause the computer to carry out the method of the first aspect.

### BRIEF DESCRIPTION OF THE DRAWINGS

The accompanying drawings illustrate a number of examples and are a part of the specification. Together with the following description, these drawings demonstrate and explain various principles of the instant disclosure.
FIG. 1 is a block diagram of an exemplary system for programmatically updating contexts for multi-user conferences.
FIG. 2 is a flow diagram of an exemplary method for programmatically updating contexts for multi-user conferences.
FIG. 3 is an illustration of an exemplary multi-user video conference.
FIG. 4 is an illustration of two exemplary multi-user video conferences with different contexts.
FIG. 5 is an illustration of an exemplary multi-user artificial reality conference in multiple environments.
FIG. 6 is a block diagram of an additional system for programmatically updating contexts for multi-user conferences.
FIG. 7 is an illustration of exemplary augmented-reality glasses that may be used in connection with embodiments of this disclosure.
FIG. 8 is an illustration of an exemplary virtual-reality headset that may be used in connection with embodiments of this disclosure.

Throughout the drawings, identical reference characters and descriptions indicate similar, but not necessarily identical, elements. While the examples described herein are susceptible to various modifications and alternative forms, specific examples have been shown in the drawings and will be described in detail herein. However, the examples described herein are not intended to be limited to the particular forms disclosed. Rather, the instant disclosure covers all modifications, equivalents, and alternatives falling within the scope of the appended claims.

Features from any of the embodiments or examples described herein may be used in combination with one another in accordance with the general principles described herein. These and other embodiments, features, and advantages will be more fully understood upon reading the following detailed description in conjunction with the accompanying drawings and claims.

### DETAILED DESCRIPTION

The present disclosure is generally directed to systems and methods for identifying a context of a multi-user conference and automatically updating a user's display name, background, avatar, environment, and/or other digital objects to match the context. For example, a user may switch display names and backgrounds between a personal video call and a professional video call. In another example, the setting of an artificial reality (AR) call may change to reflect a different environment, such as a corporate retreat in the mountains. In some examples, a generative artificial intelligence (Al) algorithm may generate backgrounds, environments, and/or other digital objects to match the context of the call. For example, a generative AI may generate clothing for a virtual avatar to match a new environment.

In some examples, the systems described herein may improve the functioning of a computing device by enabling the computing device to programmatically modify and/or generate digital objects in response to detecting the thematic context of a multi-user conference. Additionally, the systems described herein may improve the fields of multi-user conferencing and/or AR by automatically modifying various components of a multi-user conference to match a thematic context.

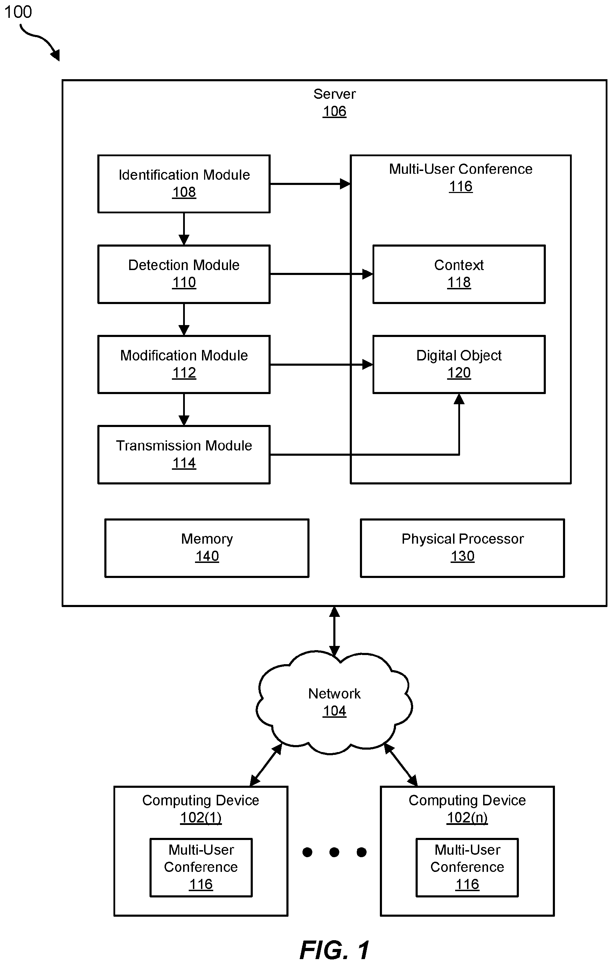

In some examples, the systems described herein may programmatically update contexts for multi-user conferences in various configurations of devices. FIG. 1 is a block diagram of an exemplary system 100 for programmatically updating contexts for multi-user conferences via a conference and/or media server. In one example, and as will be described in greater detail below, a server 106 may be configured with an identification module 108 that may identify a multi-user conference 116 being participated in by a plurality of computing devices. At some point during the initiation and/or process of multi-user conference 116, a detection module 110 may detect a context 118 of multi-user conference 116. Next, a modification module 112 may modify, in response to detecting context 118, a digital object 120 within the multi-user conference to align with context 118. A transmission module 114 may transmit the modified digital object 120 to the plurality of computing devices as part of multi-user conference 116.

Multi-user conference 116 or the term conference may generally represent or refer to any form of digital communication involving two or more users. A multi-user conference may include audio, video, and/or AR components. For example, a voice call, video call, and/or AR conference may all be examples of multi-user conferences. In some examples, each user participating in a conference may be participating via one or more devices. For example, a user may participate in a conference via a laptop, phone, and/or AR headset.

Context 118 or the terms thematic context or context may generally represent or refer to the circumstances and/or setting of a conference. In some examples, a context of a conference may refer to the purpose of the conference, such as whether it is a personal conference or a work conference. In one example, a context of a conference may be even more narrow, such as a personal conference with family versus a personal conference with a gaming group or a work conference with one's peers versus a work conference presenting to upper management or to clients. Additionally or alternatively, a context of a conference may include a virtual and/or imagined setting in which the conference takes place, such as a tropical resort, a mountain retreat, a theater, a stadium, a nightclub, a boardroom, a spaceship, and/or any other type of real or imagined location.

Digital object 120 or the term object may generally represent or refer to any type of virtual and/or digital object with at least one of a graphical and/or audio component. In some examples, a digital object may be a graphical user interface (GUI) element such as a display name for a user. In some examples, an object may be a two-dimensional visual element such as a virtual background displayed within a live video of a user. Additionally or alternatively, an object may be three-dimensional, such as a volumetric object within an AR environment. In some examples, an object may include audio effects, such as a voice-changer or echo effect for a user's voice or a sound effect associated with a GUI component and/or another object. In one example, an object may be a representation of a user, such as an avatar of a user within a GUI and/or an AR environment.

Server 106 generally represents any type or form of backend computing device that may host a multi-user conference. Examples of server 106 may include, without limitation, application servers, database servers, and/or any other relevant type of server. Although illustrated as a single entity in FIG. 1, server 106 may include and/or represent a group of multiple servers that operate in conjunction with one another. Though illustrated as a server, in some examples, the modules described above may be installed and/or operate on an endpoint computing device (e.g., any or all of computing devices 102(1)-(n).

Computing devices 102(1)-(n) generally represent any type or form of computing device capable of reading computer-executable instructions. For example, computing devices 102(1)-(n) may represent personal computing devices. Additional examples of computing devices may include, without limitation, a laptop, a desktop, a tablet, a smart phone, a wearable device, a smart device, an AR device, a personal digital assistant (PDA), etc.

As illustrated in FIG. 1, example system 100 may also include one or more memory devices, such as memory 140. Memory 140 generally represents any type or form of volatile or non-volatile storage device or medium capable of storing data and/or computer-readable instructions. In one example, memory 140 may store, load, and/or maintain one or more of the modules illustrated in FIG. 1. Examples of memory 140 include, without limitation, Random Access Memory (RAM), Read Only Memory (ROM), flash memory, Hard Disk Drives (HDDs), Solid-State Drives (SSDs), optical disk drives, caches, variations or combinations of one or more of the same, and/or any other suitable storage memory.

As illustrated in FIG. 1, example system 100 may also include one or more physical processors, such as physical processor 130. Physical processor 130 generally represents any type or form of hardware-implemented processing unit capable of interpreting and/or executing computer-readable instructions. In one example, physical processor 130 may access and/or modify one or more of the modules stored in memory 140. Additionally or alternatively, physical processor 130 may execute one or more of the modules. Examples of physical processor 130 include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, and/or any other suitable physical processor.

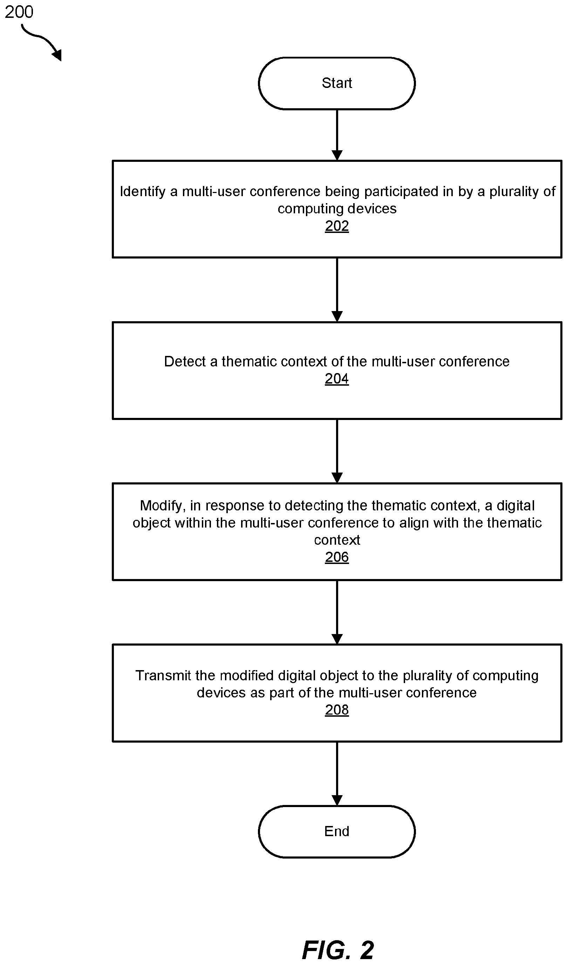

FIG. 2 is a flow diagram of an exemplary method 200 for programmatically updating contexts for multi-user conferences. In some examples, at step 202, the systems described herein may identify a multi-user conference being participated in by a plurality of computing devices. The systems described herein may identify the conference in a variety of ways and/or contexts. For example, the systems described herein may identify a conference as the conference is being initiated by conferencing software on a server configured with the systems described herein. In another example, the systems described herein may identify a conference at the time that a user (e.g., the user operating a computing device configured with the systems described herein) joins the conference.

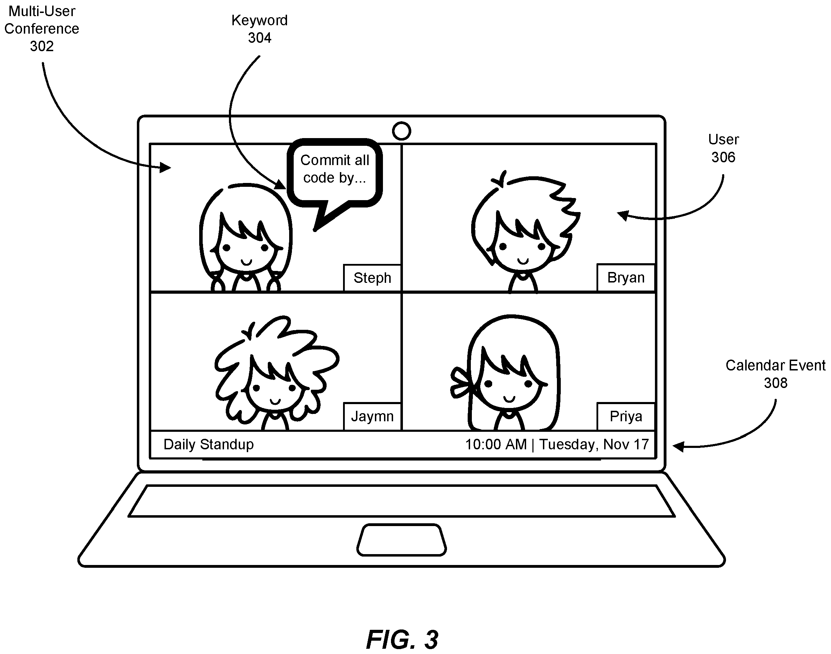

At step 204, the systems described herein may detect a thematic context of the multi-user conference. The systems described herein may detect the thematic context in a variety of ways based on various different factors within and/or associated with the context. In some examples, detecting the thematic context of the multi-user conference may include identifying at least one keyword associated with the thematic context in speech of a user participating in the multi-user conference. The term keyword may generally refer to any word and/or multi-word phrase that can be associated with a context. For example, as illustrated in FIG. 3, the systems described herein may detect the context of a multi-user conference 302 based on a keyword 304, such as "code," in the speech of a user participating in multi-user conference 302. In this example, the systems described herein may determine that the context is a work meeting. In some examples, the systems described herein may determine the context based on a keyword in a text-based chat within the conference.

In another example, the detecting the thematic context of the multi-user conference may include identifying at least one user participating in the multi-user conference who is associated with the thematic context. For example, the systems described herein may identify user 306 as being a colleague who is associated with the work context. In some examples, the systems described herein may identify multiple users associated with a thematic context to further narrow down the context and/or avoid potential problems with users who share contexts. For example, the systems described herein may determine while one user is both a work colleague and a personal friend, three other users on the call are exclusively work colleagues, and therefore the call is a work call. In another example, the systems described herein may determine that all users on the call are members of the same team at work and therefore the context of the conference is specifically a team meeting.

Additionally or alternatively, detecting the thematic context of the multi-user conference may include matching the multi-user conference with a scheduled event on a calendar that is associated with the thematic context. The term scheduled event may generally refer to any type of digital calendar event with a date and time, whether manually or automatically generated (e.g., from a meeting invitation). For example, the systems described herein may match the date and time of multi-user conference 302 with a calendar event 308 that is a daily standup meeting and may determine that, because the daily standup meeting is associated with a work context, multi-user conference 302 is a work conference.

The systems described herein may detect the context of a conference in various other ways, such as based on a name or title associated with the context and/or based on manual input from one or more users specifying the context. In some examples, the systems described herein may detect a context for a conference based on virtual objects present in the conference. For example, the systems may interpret a user holding a virtual baseball and baseball bat as indicating the thematic context of the conference is a baseball game. In another example, the systems described herein may interpret a user selecting an avatar wearing scuba gear as indicating that the thematic context of the conference is underwater.

Returning to FIG. 2, at step 206, the systems described herein may modify, in response to detecting the thematic context, a digital object within the multi-user conference to align with the thematic context. The systems described herein may modify various types of digital objects in various ways to align with the thematic context.

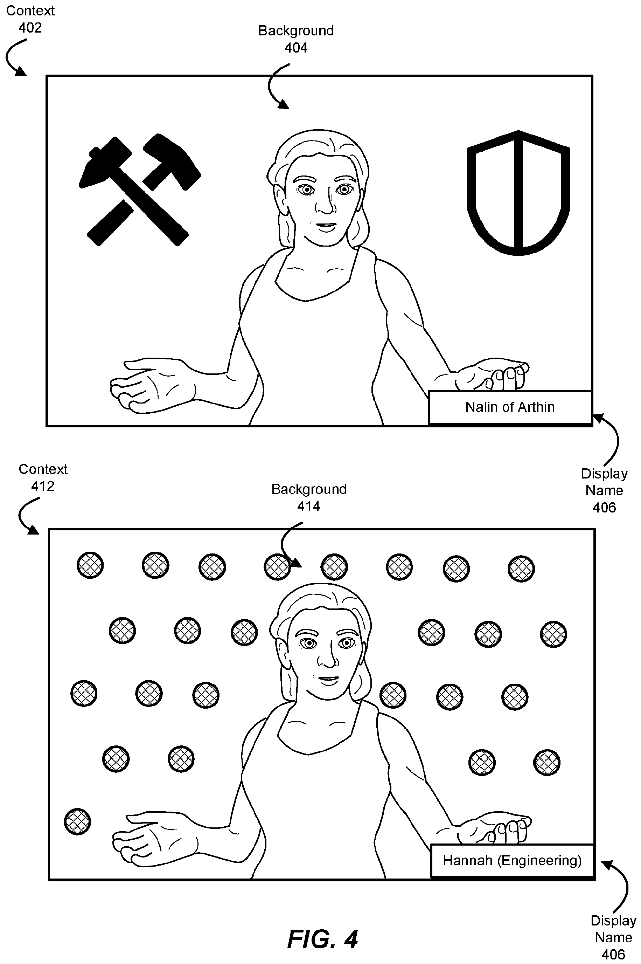

In some examples, modifying the digital object may include modifying a virtual object that is visible in a graphical representation of the multi-user conference. For example, the multi-user conference may include a video conference with a live video feed captured by at least one of the computing devices and modifying the digital object may include modifying a background of the live video feed and/or a display name of a user. In one example, as illustrated in FIG. 4, a video conference may have a context 402 of a tabletop gaming session. In context 402, a user may have a background 404 with items relevant to their character's class and/or a display name 406 that displays the name of their character. If the user leaves the tabletop gaming session and later joins a work meeting, the systems described herein may detect that the work meeting is a different context 412 and may update the background to a background 414 with the company logo and/or the display name to a display name 416 with the user's name and department. By automatically detecting the changing context and updating the relevant GUI elements in this fashion, the systems described herein may save the user from having to remember to change these elements manually between conferences with different contexts.

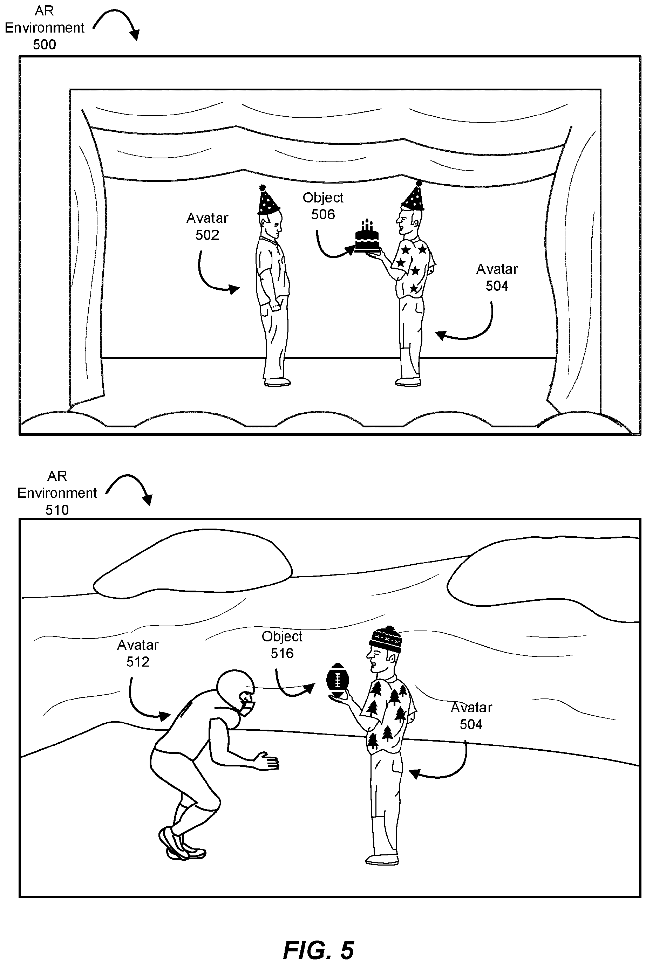

In some examples, a multi-user conference may include an AR conference within an AR environment. The term "artificial reality" or AR may generally refer to augmented reality and/or virtual reality. Augmented reality may describe a physical environment that is overlaid with virtual objects via an AR device (e.g., glasses or a headset). Virtual reality may describe a fully virtual environment that is self-contained and is not overlaid over a pre-existing physical environment. The term AR environment may generally refer to any fully or partially virtual location generated by AR software and/or hardware, including but not limited to virtual indoor areas (e.g., a house, a conference room, etc.) and/or virtual outdoor areas (e.g., a beach, a sports stadium, etc. In these examples, modifying the digital object may include modifying the AR environment and/or AR objects. For example, as illustrated in FIG. 5, a conference may have a thematic context of a cast party and may be held in an AR environment 500 of a theater. In this example, avatars 502 and/or 504 may wear party hats and/or other festive clothing. In one example, avatar 504 may hold an object 506 that is a cake. If the participants decide to change the theme of the conference to a casual game of football in a scenic outdoor location, the systems described herein may detect the new thematic context and replace AR environment 500 with an AR environment 510 of a grassy riverbank. In some examples, the systems described herein may make minor changes to avatars, such as updating avatar 504 with a different shirt and hat. Additionally or alternatively, the systems described herein may make significant changes to avatars, such as replacing avatar 502 with an avatar 512 that represents the same user but is a completely different body model and outfit.

In some examples, the systems described herein may iteratively modify objects as part of a feedback loop. For example, a user may suggest moving the virtual location of the conference to an outdoor area and the systems described herein may respond by replacing AR environment 500 with AR environment 510. A participant may then, in response to the new environment, suggest a game of football and the systems described herein may switch out object 506 for an object 516 such as a virtual football. Upon seeing object 516, a participant may express a desire to catch the football and the systems described herein may replace avatar 502 with avatar 512.

In some examples, modifying the digital object may include modifying audio of the multi-user conference. In some examples, if the multi-user conference is or includes a voice call, the systems described herein may modify a digital object by modifying the voice of one or more users. For example, the systems described herein may make a participant's voice sound deeper or higher or add effects such as an echo. Additionally or alternatively, the systems described herein may modify audio by adding or changing sound effects to digital objects, such as applause from a crowd, the rushing noise of a stream, background music, and so forth.

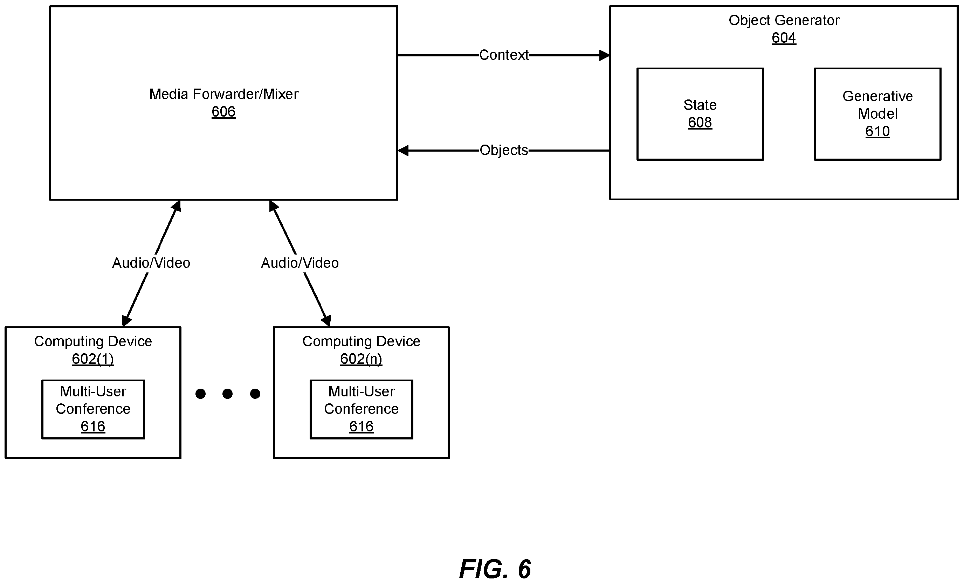

In some examples, the systems described herein may draw digital objects from a library of pre-existing digital objects. Additionally or alternatively, modifying the digital object may include using a generative Al algorithm to create the modified version of the digital object based on the thematic context. The term generative AI may generally refer to any algorithm that analyzes text, images, virtual objects, and/or other data and produces novel data of the same type based on the training data. For example, a generative AI may analyze data of virtual clothing for avatars and produce new virtual clothing. In some examples, the systems described herein may incorporate a generative Al algorithm that communicates with and/or is part of a conference hosting application. For example, as illustrated in FIG. 6, a media forwarder/mixer 606 (e.g., a server) may send and receive audio and/or video from computing devices 602(1)-(n) as part of a multi-user conference 616. In one example, media forwarder/mixer 606 may send context to an object generator 604 that maintains a state 608 and a generative model 610. Object generator 604 may, using a generative Al algorithm that incorporates state 608 and/or generative model 610, generate one or more digital objects and send these digital objects to media forwarder/mixer for inclusion in multi-user conference 616. For example, if a participant decides that the new thematic context of multi-user conference 616 is a tropical beach, object generator 604 may generate suitable beachwear for the users' avatars, volumetric objects such as umbrellas and towels for the beach, water sounds and/or music for the beach, an AR beach environment with sand and waves, and/or any other suitable digital objects to match the thematic context.

Returning to FIG. 2, at step 208, the systems described herein may transmit the modified digital object to the plurality of computing devices as part of the multi-user conference. In some examples, the systems described herein may be hosted on a server and may transmit data from the server to endpoint computing devices. Additionally or alternatively, all or part of the systems described herein may be hosted on an endpoint computing device and may transmit data to one or more servers and/or other endpoint computing devices participating in the multi-user conference.

In some examples, the systems described herein may modify one or more digital objects multiple times as a conference shifts between thematic contexts. In one example, the systems described herein may detect a new thematic context of the multi-user conference, modify, in response to detecting the new thematic context, the digital object within the multi-user conference to align with the new thematic context, and transmit the modified digital object to the computing devices as part of the multi-user conference. For example, a brainstorming session for a professional retreat may switch between a tropical beach, a mountain lodge, and a forest cabin as the participants discuss various options for hosting the retreat. In this example, the systems described herein may update various digital objects such as avatars, AR environments, and so forth to match each virtual location.

As described above, the systems and methods described herein may programmatically modify digital objects, remove digital objects, and/or generate new digital objects in a multi-user conference in response to a changing thematic context of the conference. For example, the systems described herein may automatically switch a user's display name and virtual background between a tabletop session, a work meeting, and a call with family. In another example, the systems described herein may automatically update users' avatars and items to match changing virtual settings in an AR environment, such as from a theater to a field to a beach to a mountain lodge. By automatically updating various objects within a conference to match the thematic context, the systems described herein may save users time, help users avoid embarrassment, and create seamless immersive virtual experiences.

Embodiments of the present disclosure may include or be implemented in conjunction with various types of artificial reality, virtual reality, and/or augmented reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some examples, artificial reality may also be associated with applications, products, accessories, services, or some combination thereof, that are used to, for example, create content in an artificial reality and/or are otherwise used in (e.g., to perform activities in) an artificial reality.

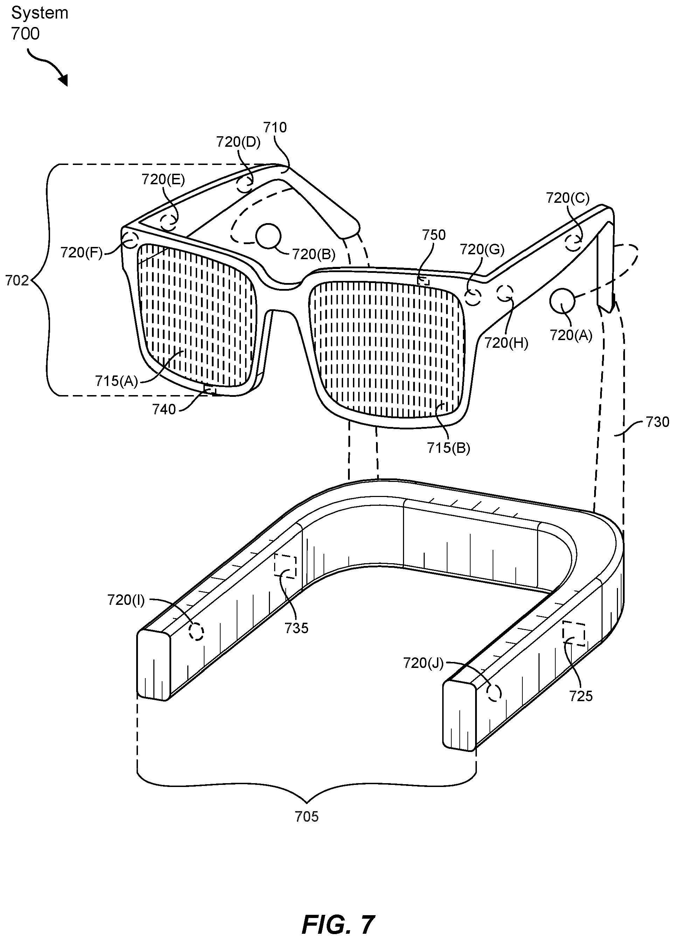

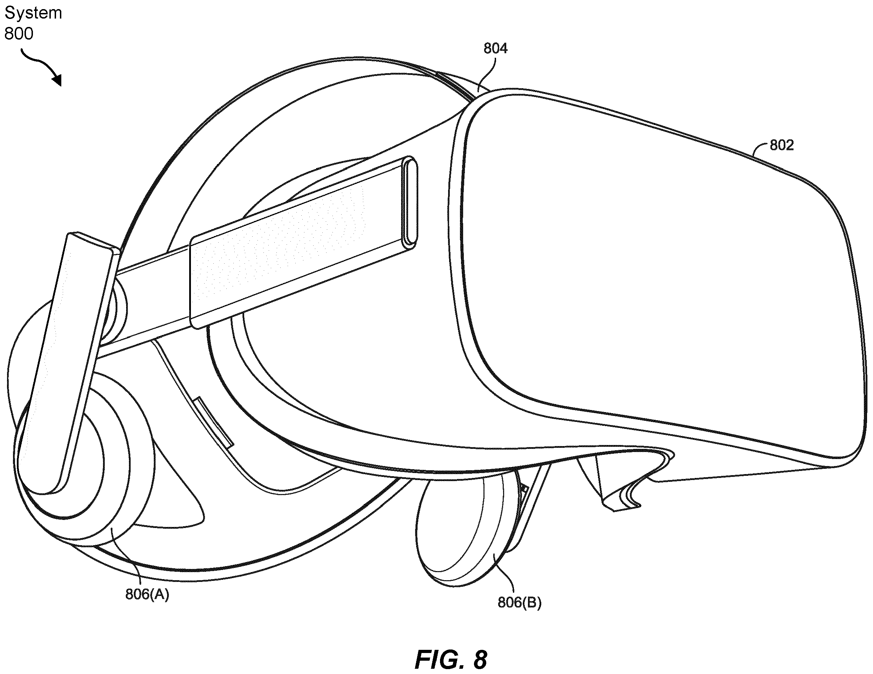

Artificial-reality systems may be implemented in a variety of different form factors and configurations. Some artificial reality systems may be designed to work without near-eye displays (NEDs). Other artificial reality systems may include an NED that also provides visibility into the real world (such as, e.g., augmented-reality system 700 in FIG. 7) or that visually immerses a user in an artificial reality (such as, e.g., virtual-reality system 800 in FIG. 8). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 7, augmented-reality system 700 may include an eyewear device 702 with a frame 710 configured to hold a left display device 715(A) and a right display device 715(B) in front of a user's eyes. Display devices 715(A) and 715(B) may act together or independently to present an image or series of images to a user. While augmented-reality system 700 includes two displays, embodiments of this disclosure may be implemented in augmented-reality systems with a single NED or more than two NEDs.

In some examples, augmented-reality system 700 may include one or more sensors, such as sensor 740. Sensor 740 may generate measurement signals in response to motion of augmented-reality system 700 and may be located on substantially any portion of frame 710. Sensor 740 may represent one or more of a variety of different sensing mechanisms, such as a position sensor, an inertial measurement unit (IMU), a depth camera assembly, a structured light emitter and/or detector, or any combination thereof. In some examples, augmented-reality system 700 may or may not include sensor 740 or may include more than one sensor. In examples in which sensor 740 includes an IMU, the IMU may generate calibration data based on measurement signals from sensor 740. Examples of sensor 740 may include, without limitation, accelerometers, gyroscopes, magnetometers, other suitable types of sensors that detect motion, sensors used for error correction of the IMU, or some combination thereof.

In some examples, augmented-reality system 700 may also include a microphone array with a plurality of acoustic transducers 720(A)-120(J), referred to collectively as acoustic transducers 720. Acoustic transducers 720 may represent transducers that detect air pressure variations induced by sound waves. Each acoustic transducer 720 may be configured to detect sound and convert the detected sound into an electronic format (e.g., an analog or digital format). The microphone array in FIG. 7 may include, for example, ten acoustic transducers: 720(A) and 720(B), which may be designed to be placed inside a corresponding ear of the user, acoustic transducers 720(C), 720(D), 720(E), 720(F), 720(G), and 720(H), which may be positioned at various locations on frame 710, and/or acoustic transducers 720(I) and 720(J), which may be positioned on a corresponding neckband 705.

In some examples, one or more of acoustic transducers 720(A)-(J) may be used as output transducers (e.g., speakers). For example, acoustic transducers 720(A) and/or 720(B) may be earbuds or any other suitable type of headphone or speaker.

The configuration of acoustic transducers 720 of the microphone array may vary. While augmented-reality system 700 is shown in FIG. 7 as having ten acoustic transducers 720, the number of acoustic transducers 720 may be greater or less than ten. In some examples, using higher numbers of acoustic transducers 720 may increase the amount of audio information collected and/or the sensitivity and accuracy of the audio information. In contrast, using a lower number of acoustic transducers 720 may decrease the computing power required by an associated controller 750 to process the collected audio information. In addition, the position of each acoustic transducer 720 of the microphone array may vary. For example, the position of an acoustic transducer 720 may include a defined position on the user, a defined coordinate on frame 710, an orientation associated with each acoustic transducer 720, or some combination thereof.

Acoustic transducers 720(A) and 720(B) may be positioned on different parts of the user's ear, such as behind the pinna, behind the tragus, and/or within the auricle or fossa. Or, there may be additional acoustic transducers 720 on or surrounding the ear in addition to acoustic transducers 720 inside the ear canal. Having an acoustic transducer 720 positioned next to an ear canal of a user may enable the microphone array to collect information on how sounds arrive at the ear canal. By positioning at least two of acoustic transducers 720 on either side of a user's head (e.g., as binaural microphones), augmented-reality system 700 may simulate binaural hearing and capture a 3D stereo sound field around about a user's head. In some examples, acoustic transducers 720(A) and 720(B) may be connected to augmented-reality system 700 via a wired connection 730, and in other examples acoustic transducers 720(A) and 720(B) may be connected to augmented-reality system 700 via a wireless connection (e.g., a BLUETOOTH connection). In still other examples, acoustic transducers 720(A) and 720(B) may not be used at all in conjunction with augmented-reality system 700.

Acoustic transducers 720 on frame 710 may be positioned in a variety of different ways, including along the length of the temples, across the bridge, above or below display devices 715(A) and 715(B), or some combination thereof. Acoustic transducers 720 may also be oriented such that the microphone array is able to detect sounds in a wide range of directions surrounding the user wearing the augmented-reality system 700. In some examples, an optimization process may be performed during manufacturing of augmented-reality system 700 to determine relative positioning of each acoustic transducer 720 in the microphone array.

In some examples, augmented-reality system 700 may include or be connected to an external device (e.g., a paired device), such as neckband 705. Neckband 705 generally represents any type or form of paired device. Thus, the following discussion of neckband 705 may also apply to various other paired devices, such as charging cases, smart watches, smart phones, wrist bands, other wearable devices, hand-held controllers, tablet computers, laptop computers, other external compute devices, etc.

As shown, neckband 705 may be coupled to eyewear device 702 via one or more connectors. The connectors may be wired or wireless and may include electrical and/or non-electrical (e.g., structural) components. In some cases, eyewear device 702 and neckband 705 may operate independently without any wired or wireless connection between them. While FIG. 7 illustrates the components of eyewear device 702 and neckband 705 in example locations on eyewear device 702 and neckband 705, the components may be located elsewhere and/or distributed differently on eyewear device 702 and/or neckband 705. In some examples, the components of eyewear device 702 and neckband 705 may be located on one or more additional peripheral devices paired with eyewear device 702, neckband 705, or some combination thereof.

Pairing external devices, such as neckband 705, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 700 may be provided by a paired device or shared between a paired device and an eyewear device, thus reducing the weight, heat profile, and form factor of the eyewear device overall while still retaining desired functionality. For example, neckband 705 may allow components that would otherwise be included on an eyewear device to be included in neckband 705 since users may tolerate a heavier weight load on their shoulders than they would tolerate on their heads. Neckband 705 may also have a larger surface area over which to diffuse and disperse heat to the ambient environment. Thus, neckband 705 may allow for greater battery and computation capacity than might otherwise have been possible on a stand-alone eyewear device. Since weight carried in neckband 705 may be less invasive to a user than weight carried in eyewear device 702, a user may tolerate wearing a lighter eyewear device and carrying or wearing the paired device for greater lengths of time than a user would tolerate wearing a heavy standalone eyewear device, thereby enabling users to more fully incorporate artificial reality environments into their day-to-day activities.

Neckband 705 may be communicatively coupled with eyewear device 702 and/or to other devices. These other devices may provide certain functions (e.g., tracking, localizing, depth mapping, processing, storage, etc.) to augmented-reality system 700. In the example of FIG. 7, neckband 705 may include two acoustic transducers (e.g., 720(I) and 720(J)) that are part of the microphone array (or potentially form their own microphone subarray). Neckband 705 may also include a controller 725 and a power source 735.

Acoustic transducers 720(I) and 720(J) of neckband 705 may be configured to detect sound and convert the detected sound into an electronic format (analog or digital). In the example of FIG. 7, acoustic transducers 720(I) and 720(J) may be positioned on neckband 705, thereby increasing the distance between the neckband acoustic transducers 720(I) and 720(J) and other acoustic transducers 720 positioned on eyewear device 702. In some cases, increasing the distance between acoustic transducers 720 of the microphone array may improve the accuracy of beamforming performed via the microphone array. For example, if a sound is detected by acoustic transducers 720(C) and 720(D) and the distance between acoustic transducers 720(C) and 720(D) is greater than, e.g., the distance between acoustic transducers 720(D) and 720(E), the determined source location of the detected sound may be more accurate than if the sound had been detected by acoustic transducers 720(D) and 720(E).

Controller 725 of neckband 705 may process information generated by the sensors on neckband 705 and/or augmented-reality system 700. For example, controller 725 may process information from the microphone array that describes sounds detected by the microphone array. For each detected sound, controller 725 may perform a direction-of-arrival (DOA) estimation to estimate a direction from which the detected sound arrived at the microphone array. As the microphone array detects sounds, controller 725 may populate an audio data set with the information. In examples in which augmented-reality system 700 includes an inertial measurement unit, controller 725 may compute all inertial and spatial calculations from the IMU located on eyewear device 702. A connector may convey information between augmented-reality system 700 and neckband 705 and between augmented-reality system 700 and controller 725. The information may be in the form of optical data, electrical data, wireless data, or any other transmittable data form. Moving the processing of information generated by augmented-reality system 700 to neckband 705 may reduce weight and heat in eyewear device 702, making it more comfortable to the user.

Power source 735 in neckband 705 may provide power to eyewear device 702 and/or to neckband 705. Power source 735 may include, without limitation, lithium-ion batteries, lithium-polymer batteries, primary lithium batteries, alkaline batteries, or any other form of power storage. In some cases, power source 735 may be a wired power source. Including power source 735 on neckband 705 instead of on eyewear device 702 may help better distribute the weight and heat generated by power source 735.

As noted, some artificial reality systems may, instead of blending an artificial reality with actual reality, substantially replace one or more of a user's sensory perceptions of the real world with a virtual experience. One example of this type of system is a head-worn display system, such as virtual-reality system 800 in FIG. 8, that mostly or completely covers a user's field of view. Virtual-reality system 800 may include a front rigid body 802 and a band 804 shaped to fit around a user's head. Virtual-reality system 800 may also include output audio transducers 806(A) and 806(B). Furthermore, while not shown in FIG. 8, front rigid body 802 may include one or more electronic elements, including one or more electronic displays, one or more inertial measurement units (IMUs), one or more tracking emitters or detectors, and/or any other suitable device or system for creating an artificial-reality experience.

Artificial reality systems may include a variety of types of visual feedback mechanisms. For example, display devices in augmented-reality system 700 and/or virtual-reality system 800 may include one or more liquid crystal displays (LCDs), light emitting diode (LED) displays, microLED displays, organic LED (OLED) displays, digital light project (DLP) micro-displays, liquid crystal on silicon (LCoS) micro-displays, and/or any other suitable type of display screen. These artificial reality systems may include a single display screen for both eyes or may provide a display screen for each eye, which may allow for additional flexibility for varifocal adjustments or for correcting a user's refractive error. Some of these artificial reality systems may also include optical subsystems having one or more lenses (e.g., concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial reality systems described herein may include one or more projection systems. For example, display devices in augmented-reality system 700 and/or virtual-reality system 800 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial reality systems may also be configured with any other suitable type or form of image projection system, such as retinal projectors used in virtual retina displays.

The artificial reality systems described herein may also include various types of computer vision components and subsystems. For example, augmented-reality system 700 and/or virtual-reality system 800 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial reality system may process data from one or more of these sensors to identify a location of a user, to map the real world, to provide a user with context about real-world surroundings, and/or to perform a variety of other functions.

The artificial reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some examples, a single transducer may be used for both audio input and audio output.

In some examples, the artificial reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial reality devices, within other artificial reality devices, and/or in conjunction with other artificial reality devices.

By providing haptic sensations, audible content, and/or visual content, artificial reality systems may create an entire virtual experience or enhance a user's real-world experience in a variety of contexts and environments. For instance, artificial reality systems may assist or extend a user's perception, memory, or cognition within a particular environment. Some systems may enhance a user's interactions with other people in the real world or may enable more immersive interactions with other people in a virtual world. Artificial reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial reality experience in one or more of these contexts and environments and/or in other contexts and environments.

As detailed above, the computing devices and systems described and/or illustrated herein broadly represent any type or form of computing device or system capable of executing computer-readable instructions, such as those contained within the modules described herein. In their most basic configuration, these computing device(s) may each include at least one memory device and at least one physical processor.

In some examples, the term "memory device" generally refers to any type or form of volatile or non-volatile storage device or medium capable of storing data and/or computer-readable instructions. In one example, a memory device may store, load, and/or maintain one or more of the modules described herein. Examples of memory devices include, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In some examples, the term "physical processor" generally refers to any type or form of hardware-implemented processing unit capable of interpreting and/or executing computer-readable instructions. In one example, a physical processor may access and/or modify one or more modules stored in the above-described memory device. Examples of physical processors include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the modules described and/or illustrated herein may represent portions of a single module or application. In addition, in certain examples one or more of these modules may represent one or more software applications or programs that, when executed by a computing device, may cause the computing device to perform one or more tasks. For example, one or more of the modules described and/or illustrated herein may represent modules stored and configured to run on one or more of the computing devices or systems described and/or illustrated herein. One or more of these modules may also represent all or portions of one or more special-purpose computers configured to perform one or more tasks.

In addition, one or more of the modules described herein may transform data, physical devices, and/or representations of physical devices from one form to another. For example, one or more of the modules recited herein may receive digital conference and/or object data to be transformed, transform the data, output a result of the transformation to update a digital object and/or environment, use the result of the transformation to display an updated thematic context of the multi-user conference, and store the result of the transformation to transmit the transformed data. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

In some examples, the term "computer-readable medium" generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the examples disclosed herein. This exemplary description is not intended to be exhaustive or to be limited to any precise form disclosed. Many modifications and variations are possible without departing from the scope of the present disclosure. The examples disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. A computer-implemented method comprising:
identifying a multi-user conference being participated in by a plurality of computing devices;
detecting a thematic context of the multi-user conference;
modifying, in response to detecting the thematic context, a digital object within the multi-user conference to align with the thematic context; and
transmitting the modified digital object to the plurality of computing devices as part of the multi-user conference.

2. The computer-implemented method of claim 1, wherein detecting the thematic context of the multi-user conference comprises identifying at least one user participating in the multi-user conference who is associated with the thematic context.

3. The computer-implemented method of claim 1 or 2, wherein detecting the thematic context of the multi-user conference comprises identifying at least one keyword associated with the thematic context in speech of a user participating in the multi-user conference.

4. The computer-implemented method of any preceding claim, wherein detecting the thematic context of the multi-user conference comprises matching the multi-user conference with a scheduled event on a calendar that is associated with the thematic context.

5. The computer-implemented method of any preceding claim, wherein the multi-user conference comprises a video conference with a live video feed captured by at least one of the plurality of computing devices.

6. The computer-implemented method of claim 5, wherein modifying the digital object comprises modifying a background of the live video feed.

7. The computer-implemented method of any preceding claim, wherein the multi-user conference comprises an artificial reality conference within an artificial reality environment;
preferably wherein modifying the digital object comprises modifying the artificial reality environment.

8. The computer-implemented method of any preceding claim, wherein modifying the digital object comprises modifying a display name of a user participating in the multi-user conference.

9. The computer-implemented method of any preceding claim, wherein modifying the digital object comprises modifying audio of the multi-user conference.

10. The computer-implemented method of any preceding claim, wherein modifying the digital object comprises modifying a virtual object that is visible in a graphical representation of the multi-user conference.

11. The computer-implemented method of any preceding claim, further comprising:
detecting a new thematic context of the multi-user conference;
modifying, in response to detecting the new thematic context, the digital object within the multi-user conference to align with the new thematic context; and
transmitting the modified digital object to the plurality of computing devices as part of the multi-user conference.

12. The computer-implemented method of any preceding claim, wherein modifying the digital object comprises using a generative artificial intelligence algorithm to create the modified digital object based on the thematic context.

13. A system comprising:
at least one processor; and
memory comprising computer-executable instructions that, when executed by the at least one processor, cause the at least one processor to carry out the method of any preceding claim.

14. A computer-readable medium comprising one or more computer-readable instructions that, when executed by at least one processor of a computing device, cause the computing device to carry out the method of any of claims 1 to 12.

15. A computer program product comprising instructions which, when the product is executed by a computer, cause the computer to carry out the method of any of claims 1 to 12.
